# EUROPEAN PATENT SPECIFICATION

(11) **EP 3 740 720 B1**
(45) Date of publication and mention of the grant of the patent: **28.05.2025**
(21) Application number: 19709558.1
(22) Date of filing: 18.01.2019
(51) Int. Cl.: F24F 5/00, F24D 3/18, F25B 25/02, F25B 29/00, F25B 27/00

(54) **METHOD AND SYSTEM OF COOLING IN HEAT GENERATION BY COMBUSTION**
VERFAHREN UND SYSTEM ZUR KÜHLUNG BEI WÄRMEERZEUGUNG DURCH VERBRENNUNG
PROCÉDÉ ET SYSTÈME DE REFROIDISSEMENT DANS LA GÉNÉRATION DE CHALEUR PAR COMBUSTION

(30) Priority: 18.01.2018 SK V50062018 U
(43) Date of publication of application: 25.11.2020
(73) Proprietor: Heloro S.R.O., 811 02 Bratislava (SK)
(72) Inventor: KONCZER, Jozef, 945 01 Komárno (SK); LUKOVICS, Július, 945 01 Komárno (SK); SZABÓ, Ernest, 945 01 Komárno (SK); POTÁSCH, Tomás, 945 01 Komárno (SK)
(74) Representative: Porubcan, Róbert
(86) International application number: PCT/IB2019/050415
(87) International publication number: WO 2019/142138

(56) References cited:
- EP-A2- 0 085 411
- EP-A2- 1 108 964
- EP-A2- 1 288 596
- WO-A1-2011/054383
- DE-A1- 19 740 398
- DE-A1- 19 834 696
- FR-A1- 2 309 806
- GB-A- 2 107 444

## Description

### Field of the invention

The technical solution concerns a new method of central energy supply for built structures in the form of heat, service hot water, cold, and possibly also electric energy from a cogeneration unit. The new method makes it possible to use solar energy to support the cooling capacity. The system may be connected to already existing central heating distribution systems.

### Background of the invention

Systems with a cogeneration unit that produces electricity by fuel combustion and transfers the resulting heat to a central heating system are already known. Trigeneration systems, where cooling is generated in addition to electric energy and heat, typically by means of an absorption refrigerating machine, are also known. Rising cooling capacity requirements are related not only to climate change and the associated air-conditioning of living spaces, but they are also influenced by needs to cool various technological spaces, such as server rooms, switchboards and the like. Requirements for the delivery of cooling capacity increase mainly in the summer months, although heat consumption is not equal to zero even during this period, heat is demanded mainly in the form of service hot water or for the heating of swimming pools and the like.

Absorption refrigeration has three circuits, between which heat exchange takes place. The hot circulating water circuit is the driving medium of internal heat exchange and it can be connected to a cogeneration unit or another heat source. The second circuit is a cooling water circuit, which carries off the heat released by internal exchange. The cooling is most often done by means of cooling towers, which, however, represents essentially a heat loss. The third circuit is a cold water circuit, which delivers cooling capacity to the consumer, for example, for the cooling of premises.

In this specification, the term water refers to any liquid heat carrier, which does not have to be water in the literal meaning of the term or in the meaning of pure water. Thus, in this specification, the term water is used in a broad sense in line with the terminology used in the heating industry. The system according to the publication US2017204806 describes a general arrangement of trigeneration with conventional compressor cooling, resulting in energy losses. Solutions according to CN105865083, US2016223208 and PL398548 are suitable for the use of alternative sources and are not effectively usable in central heating as is typical of district CHP plants of housing estates.

Publication EP1108964 describes a device, which has at least three heating medium circuits in addition to a load circuit. One heating medium circuit contains the absorbers and desorbers of all modules in series with a high temperature heat exchanger in a heat cell with an exhaust gas line and heated by a burner, a low temperature heat exchanger and a pump. The device has several modules. There are at least three heating medium circuits. A condensing exhaust gas heat exchanger is arranged in the exhaust gas line and is connected to one of the heating medium circuits.

Cogeneration units typically work with a hot circulating water temperature gradient of 90/70 ° C and if the hot circulating water is supposed to drive the absorption refrigerating machine efficiently, it is heated up to at least 100°C, which is energy inefficient. The low temperature of the hot circulating water leads to a decrease in the mean logarithmic temperature difference and the absorption refrigerating machine works with less output. For this reason, some trigeneration units use the split of the output of cooling units between absorption and compressor cooling, which increases the investment costs as well as space requirements for the placement of the system.

An energy-efficient method and system for simultaneous heat generation and cooling, in systems with a cogeneration unit as well as in systems without a cogeneration unit, is unknown and is demanded. The new method and system should also be applicable in existing district CHP plant distribution systems.

### Summary of the invention

The above mentioned disadvantages are substantially eliminated by a method of cooling for heat generation by combustion, in particular the combustion of gas fuel, where the cooling is done using an absorption refrigerating machine, whose hot circulating water circuit is connected to the combustion heat source according to this technical solution, the gist of which consists in the fact that the cooling water circuit through which heat is carried off from the absorption refrigerating machine, is connected to the heat pump inlet and the heat pump outlet is connected to the return branch of the heat distribution system. In the case of this connection, the heat from the cooling water, by which heat is carried off from the absorption refrigerating machine, is pumped by means of a heat pump into the return branch of the heat distribution system. The cooling water usually has a temperature of about 30 °C at the outlet of the absorption refrigerating machine, therefore its temperature is lower than the usual temperature of the return branch of the central heating system. By pumping low-potential heat from the cooling water, we obtain further heat, which would otherwise dissipate purposelessly, and we also stabilize the operation of the absorption refrigerating machine, which we provide with a permanent temperature gradient in the cooling water circuit, e.g., 25 °C / 30 °C.

The combustion heat source may be a heating boiler, in particular a gas boiler and/or a cogeneration unit. The new cooling method using an absorption refrigerating machine is not limited to a connection with a cogeneration unit, but is applicable for any heat source. Preferably, the heat source has a hot circulating water outlet temperature of at least 80 °C, particularly preferably 90 °C, at which modern absorption refrigerating machines are operating with a good output.

Connecting the cooling water circuit to the heat pump enables a very advantageous use of heat from the absorption refrigerating machine even though this cooling water circuit usually operates at low temperatures, for example with a temperature gradient of 30/35 °C or 25/30 °C. Due to the low temperatures, heat at such a temperature level has been considered waste heat and unusable heat so far. Connecting the cooling water circuit to the heat pump entails not only exploitation of this heat, but also a stabilization of the temperature conditions in the circuit. The desired temperature gradient for which the absorption refrigerating machine has been designed may be achieved not only by means of the heat pump control, but, where applicable, also by a three-way valve connected as a controlled bypass valve in the circuit between the cooling water outlet and the heat pump inlet.

A heat store, for example an accumulator tank, which is connected in the hot circulating water circuit and stabilizes the temperature conditions in cases of various fluctuations in the system, turned out to be an advantageous solution during the process of inventing. In addition, the accumulator tank has the advantage that the heat flow from other sources can be directed to it. Heat from solar panels, more specifically heat from thermal solar panels or heat converted from the electric energy of photovoltaic panels, can be conducted to the accumulator tank. Photovoltaic panels can also produce electric energy for the distribution system together with the cogeneration unit.

Circulating pumps are used, to achieve the necessary flows of heat transfer media, especially treated water. Circulating pumps enable to achieve the desired divergence of the water flow into the pipe branching from the main branch without the need for using a valve. Heat transfer media branches requiring physical separation may include heat exchangers. Preferably, the heat exchanger will be connected, in particular, between the heat pump outlet and the central heat distribution system, between the heat outlet of cogeneration unit and the central heat distribution unit and the like. Controlled three-way valves, by which the circuits can be bypassed, enable to control the desired temperature at the inlet to the connected element, for example at the absorption refrigerating machine inlet.

Individual system elements and devices usually have their own internal control system adapted to the main function of the element or device. These elements and devices may be produced by various manufacturers. A control unit, for example in the form of a computer with the appropriate graphical interface, will preferably serve for joint control and alignment of their activities in the system according to this technical solution. Actuating units of the individual elements and devices, such as gas boiler activation, circulating pump start, control of three-way valves, may be connected to the control unit and for its decision-making the control unit may receive information on the temperature and flow rates in various parts of the system. Preferably, all the heat-transfer media branches will have temperature sensors both on the output and return side, which will enable calculation of the amount of heat transferred and used. The control unit may store values and control settings not only as statistical data, but these values and control settings may be also used to control the system to predict appropriate control.

A system with variously dimensioned elements may be designed depending on the climatic conditions in the respective place of system implementation. For example, in the tropical zone, high cooling capacity will be required, therefore, a cogeneration unit covering the required electrical output will be used, the heat output required at the hot circulating water inlet of the absorption refrigerating machine, which goes beyond the waste heat of the cogeneration unit, will be covered by solar panels.

The present cooling method combined with heat generation allows a flexible design of various systems with different numbers of elements. In the temperate climate zone, the system will typically include a gas boiler as heat source. A connection in which the heat source is a gas boiler as well as a cogeneration unit is also possible; the start of these heat sources will be controlled according to the current needs of heat and electric energy. While preserving the main idea of the present technical solution, it is also possible to create a connection in which the boiler heats the water in the central distribution system and the cogeneration unit, using the waste heat, heats, drives the absorption refrigerating machine and at the same time transfers heat to the central distribution system depending on the excess of heat.

The advantage of the technical solution is that it increases energy utilization. Not only is the original waste heat from cogeneration used for cooling and heating in the heat distribution system, but the secondary waste heat from the absorption refrigerating machine is also used for heating in the heat distribution system. Combustion of fuel in the boiler is primarily associated with heat generation, a cooling effect of the system is also created thanks to the absorption refrigerating machine, the waste heat from the absorption refrigerating machine being reused to support the useful heat output of the system.

### Description of drawings

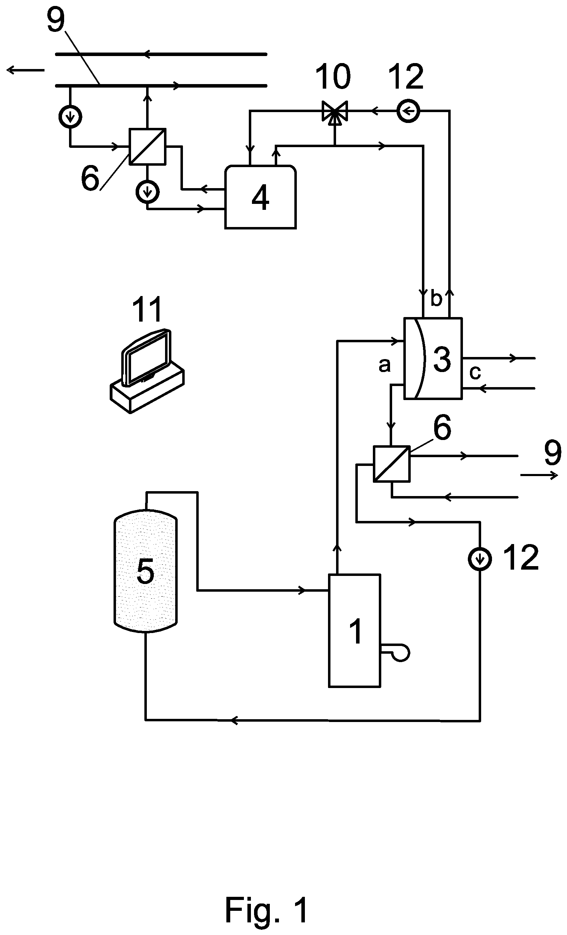

The technical solution is explained in more detail by means of figures 1 to 4. The depicted connection of the individual elements as well as the position of the heat exchangers are illustrative only, they are not to supposed to be explanatory as narrowing the range of protection. For the sake of clarity, the interconnection between the control unit and the individual system elements as well as the connection of the sensors to the control unit is not shown in the figures. The distribution of electric energy from the cogeneration unit and from the photovoltaic panels is represented by a dash-dotted line.
Figure 1 provides a view of a system with the basic structure, where the system includes a natural gas boiler, an accumulator tank, an absorption refrigerating machine and a heat pump.
Figure 2 shows the circuit diagram of a system equipped with photovoltaic panels from which the electric energy is used for the system's own consumption and heating of the water in the accumulator tank.
Figure 3 shows the circuit diagram of a system with a more complex set of elements for the island mode, where the system also includes a cogeneration unit.
Figure 4 shows a connection that includes both a gas boiler and a cogeneration unit, where both heat sources serve for central heating and heat from the cogeneration unit is used to drive the absorption refrigerating machine.

### Exemplary embodiments

### Example 1

In this example according to Figure 1, the role of the system is to heat a multi-room built structure as well as to cool the room containing the server room. The heat distribution system 9 includes a conventional piping system with a primary and a return branch. The natural gas boiler 1 is used as the heat source in this example. The boiler 1 outlet is connected to the hot circulating water inlet of the absorption refrigerating machine 3. In this example, the boiler 1 is set to maintain an output temperature of 90 °C. From the circulating water circuit, water exits the absorption refrigerating machine 3 with a temperature of about 70°C and enters the heat exchanger 6, through which the heat is transferred to hot service water and in the winter period also to also to the heaters connected to the heat distribution system 9. From the heat exchanger 6, water goes to the accumulator tank 5. The accumulator tank 5 stabilizes the temperature conditions in the system in cases of fluctuations of the heat offtake in the distribution system 9 as well as in cases of differing power input of the absorption refrigerating machine 3.

The cooling water circuit, through which heat is carried off from the absorption refrigerating machine 3, is connected to the heat pump inlet 4 and the heat pump outlet 4 is connected to the return branch of the heat distribution 9. The cooling water circuit operates with a temperature gradient of approximately 25/30 °C. The refrigerating machine 3 ,at its outlet in the cold water circuit, provides a temperature of 6 °C; after heat has been received in the server room, the water returns at a temperature of 12 °C. A three-way valve 10 is used to stabilize the temperature conditions in the cooling water circuit; the valve is controlled in such a way that the absorption refrigerating machine operates within the optimum temperature range for which it has been dimensioned. The individual elements of the system are products of various manufacturers.

The absorption refrigerating machine 3 as well as the boiler 1 have their own process control in their interior. The control unit 11 is used for their external control and for mutual alignment of their outputs; the control unit simultaneously archives the measured values of temperatures and flow rates, based on which the delivered heat and heat taken off by cooling are calculated.

### Example 2

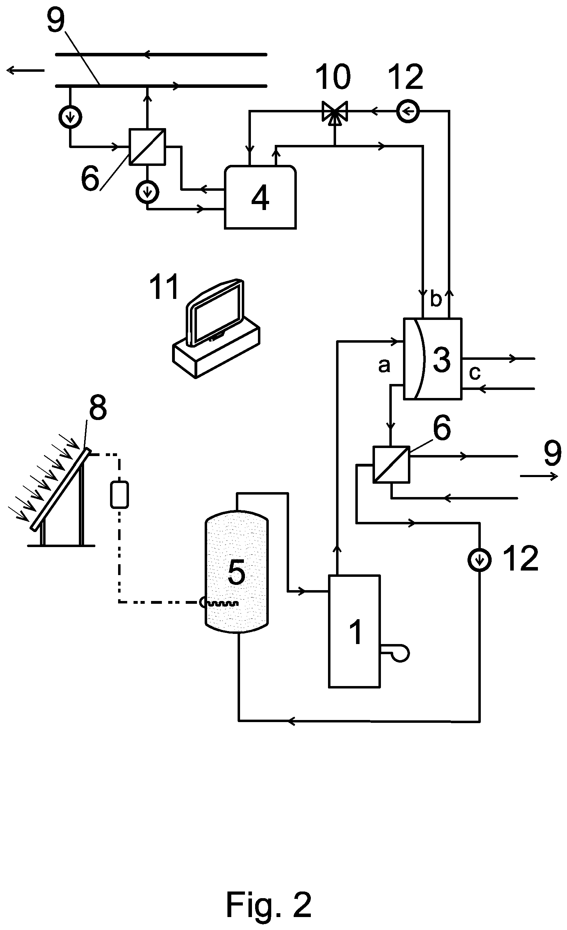

Compared to example 1, the system with the connection according to figure 2 is supplemented with photovoltaic panels 8, which produce electric energy. Electric energy is converted to alternating voltage of 240V by means of an inverter and it is used to drive circulating pumps in the system. The remainder of the energy from the photovoltaic panels 8 is converted to heat by an electric resistance coil located in the accumulator tank 5.

### Example 3

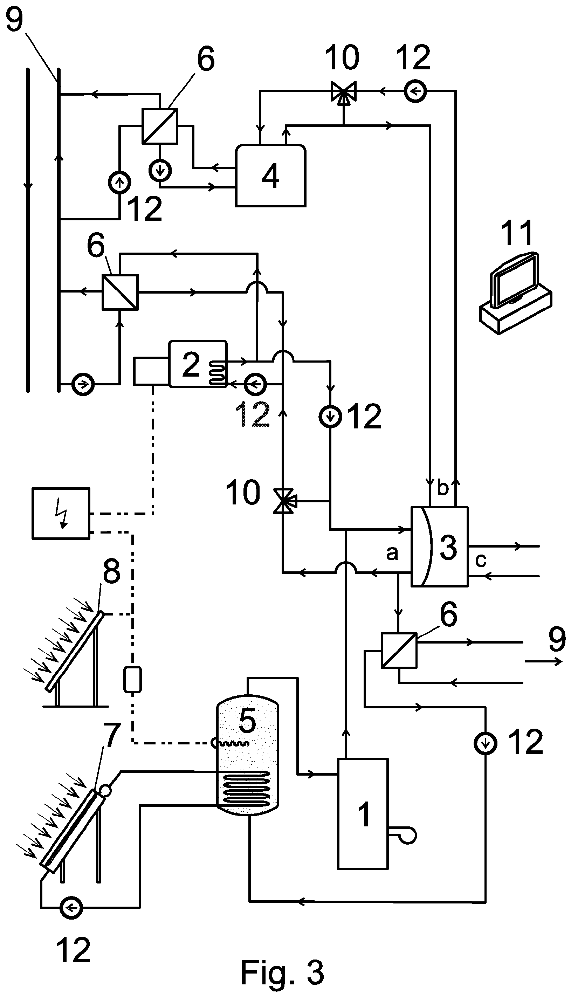

This example, as shown in Figure 3, is a system applied in the island mode, where it generates electric energy, delivers heat to the central heating system and provides cooling capacity. The control unit 11 continuously evaluates the need for heat, cold and electric energy and activates the individual elements of the system accordingly.

The main source of electricity is the cogeneration unit 2, which, in this example, combusts natural gas. The electric energy from the cogeneration unit 2 is delivered for consumers connected to the system in the island mode. The heat outlet of the cogeneration unit 2 is connected to the hot circulating water inlet of the absorption refrigerating machine 3. The waste heat from the cogeneration unit is then delivered to the heat distribution system 9 via the heat exchanger 6. The heat exchanger 6 physically separates the media in heat exchange circuits. The preferred connection of the heat outlet from the cogeneration unit 2 to the inlet of hot circulating water of the absorption refrigerating machine 3 is related to the desired high temperature at the inlet of the absorption refrigerating machine 3; even after leaving the absorption refrigerating machine 3, the water has a sufficiently high temperature for heat transfer to the central heat distribution system 9.

The absorption refrigerating machine 3 operates with a circuit of cooling water which has to be externally cooled, for example with a temperature gradient of 25/30 °C. A heat pump 4 is used for cooling; the heat pump uses the outlet of the cooling water circuit of the absorption refrigerating machine 3 as the inlet for obtaining heat. The outlet of the heat pump 4, which Is a water-water heat pump, is connected via the heat exchanger 6 to the return branch in the heat distribution system 9. It is connected to the return branch because the return branch has a lower temperature and the heat transfer is faster.

With the said connection, not only is the original waste heat from cogeneration used for cooling and heating in the heat distribution system 9, but also the secondary heat from the absorption refrigerating machine 3 is used for heating in the heat distribution system 9.

Since the heat consumption in winter can be higher than the waste heat from the cogeneration unit 2 and the absorption refrigerating machine 3, the system also includes a natural gas boiler 1.

In order to utilize solar energy, the system in this example is provided with thermal solar panels 7 and photovoltaic panels 8. Thermal solar panels 7 deliver heat to storage tank 5. The photovoltaic panels 8 produce electricity with a direct current which directs the electric resistance coil in the storage tank 5 or to an inverter that transforms electric energy into an AC voltage of 50 Hz.

Temperature sensors located on the individual branches of the circuits are connected to the control unit 11. Data on the flow rates in the individual circuit branches also go to the control unit 11. The control unit 11 controls, through converters, the three-way valves 10, circulation pumps 12 as well as the control of the boiler 1 and the cogeneration unit 2 according to the set rules and priorities for the island system.

### Example 4

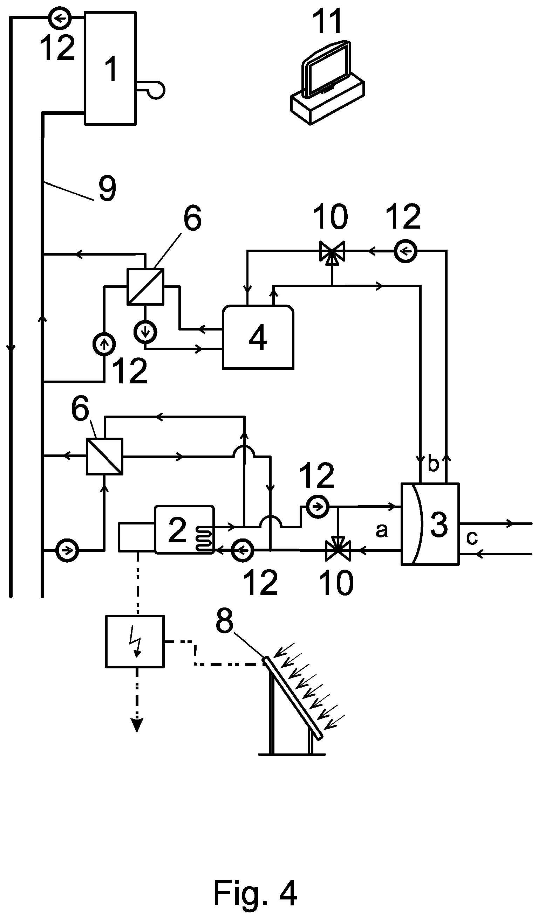

In this example according to figure 4, the system includes a natural gas boiler 1, which is the main heat source for the central heat distribution system 9 in the housing estate. The system also includes a cogeneration unit 2 connected to the public electricity grid. The cogeneration unit 2 combusts natural gas. The heat outlet of the cogeneration unit 2 is connected to the hot circulating water inlet of the absorption refrigerating machine 3. Subsequently, the waste heat from the cogeneration unit is delivered to the heat distribution system 9 through the heat exchanger 6.

The absorption refrigerating machine 3 operates with a circuit of cooling water with a temperature gradient of 25/30 °C. A heat pump 4 is used for cooling; the heat pump uses the outlet of the cooling water circuit of the absorption refrigerating machine 3 as the inlet for obtaining heat. The outlet of the heat pump 4 is connected via the heat exchanger 6 to the return branch in the heat distribution system 9. During the summer and transitional periods, the boiler 1 does not have to be switched on, waste heat from the cogeneration unit 2 is used for heating and for preparing hot water. Not only is the original waste heat from cogeneration used for cooling and heating in the heat distribution system 9, but also the secondary heat from the absorption refrigerating machine 3 is used for heating in the heat distribution system 9.

### Industrial applicability

The industrial applicability is obvious. According to this technical solution, it is possible to repeatedly assemble and use a cooling system, with an absorption refrigerating machine, which is driven by heat from a cogeneration unit or from a boiler.

### List of reference labels

1 - boiler
2 - cogeneration unit
3 - absorption refrigerating machine
4 - heat pump
5 - accumulator tank
6 - heat exchanger
7 - solar panel
8 - photovoltaic panel
9 - heat distribution system
10 - three-way valve
11 - control unit
a - hot circulating water circuit, inlet 90°C, outlet 70°C
b - cooling water circuit, inlet 25°C, outlet 30°C
c - cold water circuit, inlet 12°C, outlet 6°C

## Claims

1. A method of cooling in heat generation by combustion, in particular by combustion of gas fuel, where the cooling is done by means of an absorption refrigerating machine (3), whereby the absorption refrigerating machine (3) has three circuits: a - hot circulating water circuit, b - cooling water circuit, c - cold water circuit; whereby the hot circulating water circuit (a) is connected to a combustion heat source; with the combustion heat source heating water in a heat distribution system (9), and where the cold water circuit (c) delivers cooling capacity, and the cooling water in cooling water circuit (b) flows from the absorption refrigerating machine (3) to a heat pump (4), and the heat pump (4) transfers the heat from the cooling water into a return branch of the heat distribution system (9).

2. The method of cooling in heat generation by combustion according to claim 1, wherein a boiler (1) and/or a cogeneration unit (2) is the combustion heat source.

3. The method of cooling in heat generation by combustion according to claim 1 or 2, wherein the hot circulating water flows through the circuit of the absorption refrigerating machine (3) with inlet temperatures of 85 - 95 °C and outlet temperatures of 65 - 75 °C, the cooling water circulating between the absorption refrigerating machine (3) and the heat pump (4) has a temperature of 23 - 27 °C at the inlet of the absorption refrigerating machine (3) and temperature of 28 - 32 °C at the outlet of the absorption refrigerating machine (3).

4. A system of cooling in heat generation by combustion, in particular by combustion of gas fuel, the system comprising a combustion heat source, a heat pump (4), a heat distribution system (9), and an absorption refrigerating machine (3), where the cooling is done by means of the absorption refrigerating machine (3), whereby the absorption refrigerating machine (3) has three circuits: a - hot circulating water circuit, b - cooling water circuit, c - cold water circuit; whereby the hot circulating water circuit (a) is connected to the combustion heat source, and where the combustion heat source is connected to the heat distribution system (9), and where the cold water circuit (c) is intended to deliver cooling capacity, and the cooling water circuit (b) is connected to the heat pump (4) and the heat pump (4) is connected to a return branch of the heat distribution system (9).

5. The system of cooling in heat generation by combustion according to claim 4, wherein a heat exchanger (6) is placed between the heat pump (4) and the heat distribution system (9).

6. The system of cooling in heat generation by combustion according to claim 4 or 5, wherein it has at least one circulating pump (12), a three-way valve (10) and a circulating pump in the cooling water circuit, with the circulating pump being placed on the side of the absorption refrigerating machine (3) before the three-way valve (10).

7. The system of cooling in heat generation by combustion according to any of the claims 4 to 6, wherein it has an accumulator tank (5), the accumulator tank (5) is connected to the combustion heat source, preferably being a boiler (1).

8. The system of cooling in heat generation by combustion according to any of the claims 4 to 7, wherein the outlet of the combustion heat source is connected to the heat distribution system (9) through a heat exchanger (6).

9. The system of cooling in heat generation by combustion according to any of the claims 4 to 8, wherein it comprises a solar panel (7) which is connected to the heat distribution system (9) or to an accumulator tank (5).

10. The system of cooling in heat generation by combustion according to any of the claims 4 to 9, wherein it comprises a photovoltaic panel (8) which is connectable to a distribution box and/or to a heating element in the accumulator tank (5).

11. The system of cooling in heat generation by combustion according to any of the claims 4 to 10, wherein the combustion heat source is a cogeneration unit (2), whose electrical outlet is connectable to a distribution box and whose heat outlet is connected to the hot circulating water circuit comprising a circulating pump (12) and a three-way valve (10), the hot circulating water circuit being connected to the absorption refrigerating machine (3).

12. The system of cooling in heat generation by combustion according to any of the claims 4 to 11, wherein the combustion heat source is a boiler (1), which is connected via the hot circulating water circuit to an inlet of the absorption refrigerating machine (3), and an outlet of the absorption refrigerating machine (3) is connected via the hot circulating water circuit to an inlet of the boiler (1), and preferably, a heat exchanger (6) connected to the heat distribution system (9) is placed in the hot circulating water circuit between the outlet of the absorption refrigerating machine (3) and the inlet of the boiler (1).

13. The system of cooling in heat generation by combustion according to any of the claims 4 to 12, wherein the fuel of the combustion heat source is natural gas.

14. The system of cooling in heat generation by combustion according to any of the claims 4 to 13, wherein it has a control unit (11) which is connected to the control of the absorption refrigerating machine (3), to the control of the combustion heat source and to at least one circulating pump (12), preferably to at least one three-way valve (10).

15. The system of cooling in heat generation by combustion according to claim 14, wherein temperature sensors on branches of at least one water circuit are provided and connected to the control unit (11) and flow rate sensors on at least one branch of the at least one water circuit are provided and connected to the control unit (11), preferably on one branch of each water circuit.

## Patentansprüche

1. Verfahren zur Kühlung bei der Wärmeerzeugung durch Verbrennung, insbesondere durch Verbrennung eines gasförmigen Brennstoffs, wobei die Kühlung durch eine Absorptionskältemaschine (3) bereitgestellt wird, wobei die Absorptionskältemaschine (3) drei Kreisläufe aufweist: (a) einen Heißwasserkreislauf, (b) einen Kühlwasserkreislauf, (c) einen Kaltwasserkreislauf, wobei der Heißwasserkreislauf (a) mit einer Verbrennungswärmequelle verbunden ist; wobei die Verbrennungswärmequelle das Wasser in der Wärmeverteilungsleitung (9) erwärmt, und wobei der Kaltwasserkreislauf (c) Kühlenergie liefert und das Kühlwasser im Kühlwasserkreislauf (b) von der Absorptionskältemaschine (3) zur Wärmepumpe (4) fließt und die Wärmepumpe (4) Wärme aus dem Kühlwasser an den Rücklauf der Wärmeverteilungsleitung (9) überträgt.

2. Verfahren zur Kühlung bei der Wärmeerzeugung durch Verbrennung nach Anspruch 1, **bei dem** die Verbrennungswärmequelle ein Heizkessel (1) und/oder ein Blockheizkraftwerk (2) ist.

3. Verfahren zur Kühlung bei der Wärmeerzeugung durch Verbrennung nach Anspruch 1 oder 2, **bei dem** das heiße Umlaufwasser durch den Kreislauf Der Absorptionskältemaschine (3) mit Temperaturen am Einlass von 85 - 95 °C und Temperaturen am Auslass von 65 - 75 °C zirkuliert, wobei das zwischen der Absorptionskältemaschine (3) und der Wärmepumpe (4) zirkulierende Kühlwasser eine Temperatur von 23 - 27 °C am Einlass der Absorptionskältemaschine (3) und eine Temperatur von 28 - 32 °C am Auslass der Absorptionskältemaschine (3) aufweist.

4. Kühlsystem bei der Wärmeerzeugung durch Verbrennung, insbesondere durch Verbrennung eines gasförmigen Brennstoffs, wobei das System eine Verbrennungswärmequelle, eine Wärmepumpe (4), ein Wärmeverteilungssystem (9) und eine Absorptionskältemaschine (3) umfasst, wobei die Kühlung durch eine Absorptionskältemaschine (3) bereitgestellt wird, die Absorptionskältemaschine (3) drei Kreisläufe aufweist: (a) einen Heißwasserkreislauf, (b) einen Kühlwasserkreislauf, und (c) einen Kaltwasserkreislauf; wobei der Heißwasserkreislauf (a) mit einer Verbrennungswärmequelle verbunden ist, und wobei die Verbrennungswärmequelle mit einem Wärmeverteilungssystem (9) verbunden ist, und wobei der Kaltwasserkreislauf (c) dazu ausgelegt ist, Kühlleistung zu liefern, und der Kühlwasserkreislauf (b) mit einer Wärmepumpe (4) verbunden ist, und die Wärmepumpe (4) mit einem Rücklaufzweig des Verteilungssystems (9) verbunden ist.

5. Kühlsystem bei der Wärmeerzeugung durch Verbrennung nach Anspruch 4, **bei dem** ein Wärmetauscher (6) zwischen der Wärmepumpe (4) und dem Wärmeverteilungssystem (9) eingeordnet ist.

6. Kühlsystem bei der Wärmeerzeugung durch Verbrennung nach Anspruch 4 oder 5, **bei dem** es mindestens eine Umwälzpumpe (12), ein Dreiwegeventil (10) und eine Umwälzpumpe im Kühlwasserkreislauf aufweist, wobei die Umwälzpumpe auf der Seite der Absorptionskältemaschine (3) vor dem Dreiwegeventil (10) eingeordnet ist.

7. Kühlsystem bei der Wärmeerzeugung durch Verbrennung nach einem der Ansprüche 4 bis 6, **bei dem** das System einen Speicherbehälter (5) aufweist, wobei der Speicherbehälter (5) mit einer Verbrennungswärmequelle, vorzugsweise einem Heizkessel (1), verbunden ist.

8. Kühlsystem bei der Wärmeerzeugung durch Verbrennung nach einem der Ansprüche 4 bis 7, **bei dem** der Ausgang der Wärmeerzeugungsquelle über einen Wärmetauscher (6) mit dem Wärmeverteilungssystem (9) verbunden ist.

9. Kühlsystem bei der Wärmeerzeugung durch Verbrennung nach einem der Ansprüche 4 bis 8, **bei dem** das System ein Solarmodul (7) aufweist, der an ein Wärmeverteilungssystem (9) oder an einen Speicherbehälter (5) angeschlossen ist.

10. Kühlsystem bei der Wärmeerzeugung durch Verbrennung nach einem der Ansprüche 4 bis 9, **bei dem** das System ein Photovoltaik-Panel (8) aufweist, dass an einen Verteilerkasten und/oder an ein Heizelement im Speicherbehälter (5) angeschlossen werden kann.

11. Kühlsystem bei der Wärmeerzeugung durch Verbrennung nach einem der Ansprüche 4 bis 10, **bei dem** die Verbrennungswärmequelle ein Blockheizkraftwerk (2) ist, dessen elektrischer Ausgang an einen Verteilerschrank angeschlossen werden kann und dessen Wärmeausgang mit einem Heißwasserkreislauf (a) gekoppelt ist, der eine Umwälzpumpe (12) und ein Dreiwegeventil (10) umfasst, wobei der Heißwasserkreislauf mit einer Absorptionskältemaschine (3) verbunden ist.

12. Kühlsystem bei der Wärmeerzeugung durch Verbrennung nach einem der Ansprüche 4 bis 11, **bei dem** die Verbrennungswärmequelle ein Heizkessel (1) ist, der über einen Heißwasserkreislauf mit einem Eingang einer Absorptionskältemaschine (3) verbunden ist, und der Ausgang der Absorptionskältemaschine (3) über den Heißwasserkreislauf mit dem Eingang des Heizkessels (1) verbunden ist, und vorzugsweise ein an die Wärmeverteilungsleitung (9) angeschlossener Wärmetauscher (6) im Heißwasserkreislauf zwischen dem Ausgang der Absorptionskältemaschine (3) und dem Eingang des Heizkessels (1) angeordnet ist.

13. Kühlsystem bei der Wärmeerzeugung durch Verbrennung nach einem der Ansprüche 4 bis 12, **bei dem** der Brennstoff der Verbrennungswärmequelle Erdgas ist.

14. Kühlsystem bei der Wärmeerzeugung durch Verbrennung nach einem der Ansprüche 4 bis 13, **bei dem** es eine Steuereinheit (11) aufweist, die mit der Steuerung einer Absorptionskältemaschine (3), der Steuerung einer Verbrennungswärmequelle und mindestens einer Umwälzpumpe (12), vorzugsweise mit mindestens einem Dreiwegeventil (10), verbunden ist.

15. Kühlsystem bei der Wärmeerzeugung durch Verbrennung nach Anspruch 14, **bei dem** Temperatursensoren an den Zweigen des mindestens eines Wasserkreislaufs vorgesehen und mit der Steuereinheit (11) verbunden sind, und Durchflusssensoren an dem mindestens einen Zweig des Wasserkreislaufs vorgesehen und mit der Steuereinheit (11) verbunden sind, vorzugsweise an einem Zweig jedes Wasserkreislaufs.

## Revendications

1. Une méthode de refroidissement lors de la production de la chaleur par combustion, en particulier par combustion du combustible gazeux où le refroidissement est effectué à l'aide d'une machine frigorifique d' absorption (3), la dernière comportant trois circuits : a - un circuit d'eau chaude en circulation, b - un circuit d'eau de refroidissement, c - un circuit d'eau froide, étant donné que le circuit d'eau chaude en circulation (a) est relié à la source de chaleur de combustion ; à l'aide de la source de chaleur de combustion est chauffé l'eau dans le système de distribution de chauffage (9), et le circuit d'eau froide (c) fournit de la puissance frigorifique, et l'eau de refroidissement dans le circuit d'eau de refroidissement (b) s'écoule de la machine frigorifique d'absorption (3) vers une pompe à chaleur (4), et la pompe à chaleur (4) transfère la chaleur de l'eau de refroidissement à la branche de retour du système de distribution de chauffage (9).

2. La méthode de refroidissement lors de la production de la chaleur par combustion selon la revendication 1, **caractérisée en ce que** la source de chaleur de combustion est une chaudière (1) et/ou une unité de cogénération (2).

3. La méthode de refroidissement lors de la production de la chaleur par combustion selon la revendication 1 ou 2, **caractérisée en ce que** l'eau chaude circulant dans le circuit de la machine frigorifique d' absorption (3) a la température à l'entrée de 85 -95 °C et à la sortie de 65 - 75 °C, l'eau de refroidissement circulant entre la machine frigorifique d' absorption (3) et la pompe à chaleur (4) a une température de 23 - 27 °C à l'entrée la machine frigorifique d' absorption (3) et une température de 28 - 32 °C à la sortie la machine frigorifique d' absorption (3).

4. Un système de refroidissement lors de la production de la chaleur par combustion, en particulier par combustion du combustible gazeux, comprend une source de chaleur de combustion, une pompe à chaleur (4), un système de distribution chauffage (9) et une machine frigorifique d'absorption (3) où le refroidissement est effectué par la machine frigorifique d' absorption (3), la dernière comportant trois circuits : a - un circuit d'eau chaude en circulation, b - un circuit d'eau de refroidissement, c - un circuit d'eau froide, étant donné que le circuit d'eau chaude en circulation (a) est relié à la source de chaleur de combustion ; à l'aide de la source de chaleur de combustion est chauffée l'eau dans le système de distribution de chauffage (9), et le circuit d'eau froide (c) fournit de la puissance frigorifique, et l'eau de refroidissement dans le circuit d'eau de refroidissement (b) est reliée à la pompe à chaleur (4), et la pompe à chaleur (4) est reliée à la branche de retour du système de distribution de chauffage (9).

5. Le système de refroidissement lors de la production de la chaleur par combustion selon la revendication 4, **caractérisé en ce qu'** entre la pompe à chaleur (4) et le système de distribution de chauffage (9), un échangeur de chaleur (6) est inclus.

6. Le système de refroidissement lors de la production de la chaleur par combustion selon la revendication 4 ou 5, **caractérisé en ce qu'**il comprend au moins une pompe de circulation (12), une vanne à trois voies (10) et une pompe de circulation dans le circuit d'eau de refroidissement, la pompe de circulation étant disposée sur le côté de la machine frigorifique d' absorption (3) en amont de la vanne à trois voies (10).

7. Le système de refroidissement lors de la production de la chaleur par combustion selon quelconque des revendications 4 à 6, **caractérisé en ce qu'**il comprend un réservoir d'accumulation (5), le réservoir d'accumulation (5) est relié à la source de chaleur de combustion, de préférence à la chaudière (1).

8. Le système de refroidissement lors de la production de la chaleur par combustion selon quelconque des revendications 4 à 7, **caractérisé en ce que** la sortie de la source de chaleur est connectée au système de distribution de chauffage (9) par échangeur de chaleur (6).

9. Le système de refroidissement lors de la production de la chaleur par combustion selon quelconque des revendications 4 à 8, **caractérisé en ce qu'**il comprend un panneau solaire (7), qui est relié au système de distribution de chauffage (9) ou au réservoir d'accumulation (5).

10. Le système de refroidissement lors de la production de la chaleur par combustion selon quelconque des revendications 4 à 9, **caractérisé en ce qu'**il comprend un panneau photovoltaïque (8) pouvant être connecté à l' armoire électrique et/ou à l' élément chauffant dans le réservoir d'accumulation (5).

11. Le système de refroidissement lors de la production de la chaleur par combustion selon quelconque des revendications 4 à 10, **caractérisé en ce que** la source de chaleur de combustion est une unité de cogénération (2) dont la sortie électrique peut être connectée à l'armoire électrique et dont la sortie de chaleur est connectée au circuit d'eau chaude (a) et est composé d'une pompe de circulation (12) et d'une vanne à trois voies (10), le circuit d'eau chaude étant connecté à la machine frigorifique d' absorption (3).

12. Le système de refroidissement lors de la production de la chaleur par combustion selon quelconque des revendications 4 à 11, **caractérisé en ce que** la source de chaleur de combustion est une chaudière (1) connectée par circuit d'eau chaude à l'entrée de la machine frigorifique d'absorption (3), et la sortie de la machine frigorifique d'absorption (3) est reliée par circuit d'eau chaude à l'entrée de la chaudière (1), et de préférence, l'échangeur de chaleur (6) connecté au système de distribution de chauffage (9), est placé dans le circuit d'eau chaude entre la sortie de la machine frigorifique d' absorption (3) et l'entrée de la chaudière (1).

13. Le système de refroidissement lors de la production de la chaleur par combustion selon quelconque des revendications 4 à 12, **caractérisé en ce que** le combustible de la source de chaleur de combustion est le gaz naturel.

14. Le système de refroidissement lors de la production de la chaleur par combustion selon quelconque des revendications 4 à 13, **caractérisé en ce qu'**il dispose d'une unité de commande (11) reliée à la commande de la machine frigorifique d' absorption (3), à la commande de la source de chaleur de combustion et relié à au moins une pompe de circulation (12), de préférence à au moins une vanne à trois voies (10).

15. Le système de refroidissement lors de la production de la chaleur par combustion selon la revendication 14, **caractérisé en ce que** des capteurs de température sont prévus sur les branches d' a moins d'un circuit d'eau et connectés à l'unité de commande (11) et des capteurs de débit sur au moins une branche du circuit d'eau sont prévus et connectés à l'unité de commande (11), de préférence sur une branche de chaque circuit d'eau.
